Europäisches Patentamt

European Patent Office

Office européen des brevets

(11) Publication number: **0 240 252**
**A2**

(12) **EUROPEAN PATENT APPLICATION**

(21) Application number: 87302636.3

(51) Int. Cl.⁴: **C01B 3/56**

(22) Date of filing: 26.03.87

(30) Priority: **31.03.86 US 846213**

(43) Date of publication of application:
**07.10.87 Bulletin 87/41**

(84) Designated Contracting States:
**FR GB**

(71) Applicant: **Exxon Research and Engineering Company**
**P.O.Box 390 180 Park Avenue**
**Florham Park New Jersey 07932(US)**

(72) Inventor: **Kaul, Bal Krishan**
**2 Hutchins Lane**
**Randolph New Jersey 07869(US)**

(74) Representative: **Northover, Robert Frank et al**
**Exxon Chemical Limited Exxon Chemical Technology Centre PO Box 1**
**Abingdon Oxfordshire, OX13 6BB(GB)**

(54) Hydrogen recovery from gas process streams using zirconium alloy hydrides.

(57) Method for selectively recovering hydrogen from industrial gas streams, such as ammonia purge gas or hydro-treater stripper process streams, with a zirconium intermetallic alloy, e.g. $ZrMn_2$, capable of forming hydrides thereof without being adversely affected by the ammonia, water vapor, air, hydrogen sulfide, and hydrocarbon components which may be present in the gas streams.

EP 0 240 252 A2

# HYDROGEN RECOVERY FROM GAS PROCESS STREAMS USING ZIRCONIUM ALLOY HYDRIDES

## RELATED APPLICATION

This application is a continuation-in-part of Serial No. 583,946 filed February 27, 1984.

## FIELD OF THE INVENTION:

The present invention relates to a method for selectively recovering hydrogen from hydrogen-containing gas streams. More particularly, the invention pertains to its use of intermetallic alloys, namely certain zirconium alloys, for effectively removing hdyrogen from waste or purge-gas streams that may also contain nitrogen, argon, ammonia, air, low molecular weight hydrocarbons, water vapor, trace amounts of hydrogen sulfide, or mixtures thereof.

## BACKGROUND OF THE INVENTION

One of the major sources of commercial hydrogen is natural gas. In view of the high cost of natural gas, other sources for obtaining commercial amounts of hydrogen would be very desirable. Thus, for example, there are potentially large economic incentives for recovering hydrogen from industrial gas streams, e.g., purge or waste gas streams in petroleum and chemical plants.

Recently there has been a proposal for separating hydrogen from industrial gases that uses reversible metal hydrides. Chem. Engineering, August 9, 1984, page 34. The hydrogen-containing gas stream feed were the so-called clean streams, i.e., gas streams that do not contain contaminants which would poison the metal hydrides. The specific feed mentioned contained 60% hydrogen, 1.3% ammonia with the remainder being methane, nitrogen and argon. It was further pointed out that each commercial application will require the development of hydrides that handle gas feed streams with chemical contaminants, that may poison or adversely affect the intermetallic alloys. A lanthanum nickel alloy was used in the pilot plant operations described in the article.

A feed gas rich in ammonia and/or methane poses difficulties in the recovery of hydrogen therefrom, since these materials are known hydride poisons. Thus, for example, it has been reported in "Development of a Commercial Metal Hydride Process For Hydrogen Recovery," BNL 35-440 Report, Volume 1, 1984, E. Lee Huston, that ammonia is a strong $Mg_2Ni$ poison, and that the poisoning is so severe that the $Mg_2Ni$ cannot be used to separate hydrogen from ammonia-containing gas streams. It follows that the use of intermetallic alloys in absorption/desorption processes for recovering hydrogen from gas streams is unpredictable.

Intermetallic alloys containing zirconium and manganese as components and misch metal alloys that are useful as hydrogen storage materials are disclosed in U.S. Patent 4,163,666; Japanese published Patent Applications 6125-201 and 6125-202; U.S. Patent 4,228,145; and Intermetallic Compounds edited by J. H. Westbrook, Wiley (1967), New York, pp. 511-514, which discloses zirconium intermetallic compounds and their hydriding characteristics.

It would be advantageous to provide a hydrogen absorption/desorption process for industrial gases and especially those that contain ammonia and/or gaseous hydrocarbons. A commercially attractive hydrogen recovery process requires intermetallic alloys which are relatively inexpensive when compared to lanthanum alloys and which are neither poisoned nor adversely affected by such potential contaminants as ammonia, and one or more of the gaseous components noted above. Furthermore, the intermetallic alloy must be able to withstand the presence of trace amounts of air, oxygen, and/or hydrogen sulfide.

## SUMMARY OF THE INVENTION

In accordance with the present invention, it now has been found that zirconium manganese and zirconium nickel alloys are highly suitable for the recovery of hydrogen from industrial gas streams, e.g., purge, waste or stripper gas streams found in petroleum and chemical plants. The zirconium manganese alloys are those where x in $ZrMn_x$ ranges from 1.8-3.8, but $ZrMn_2$ is the preferred alloy. It will be further understood that ZrNi may also be utilized, but as previously noted the use of $ZrMn_2$ is especially preferred.

In general, the hydrogen removable process of this invention comprises passing the hydrogen-containing gas stream though a bed packed with the intermetallic alloy that absorbs hydrogen. When the bed is saturated or substantially saturated, the hydrogen absorption is halted, and the bed is then regenerated. The regeneration is carried out either by lowering the pressure of absorption (pressure swing) or by increasing the temperature of the bed or by doing both. It should be understood that the process of absorption and regeneration can be carried out in multiple beds to assure continuous separation and recovery of hydrogen. The regeneration conditions are dictated by the percentage purity and the percentage recovery of the hydrogen desired. Thus, for example, with 99.9% purity the recovery is 85% whereas with 98% purity the recovery rises to 95%.

## DETAILED DESCRIPTION OF THE PREFERRED EMBODIMENTS

Zirconium manganese and zirconium nickel alloys can be prepared by conventional methods. The alloys are then crushed to obtain pellets, which are irregularly shaped but for most purposes have a particle size range of about 1/32 to 1/8 inch. The preferred intermetallic alloy is $ZrMn_2$, and consequently the invention will be more specifically described in connection with the use of $ZrMn_2$.

Since the absorption of hydrogen in the $ZrMn_2$ particles or pellets is accompanied by the evolution of heat, it would be advantageous to pack the fixed bed with inerts. Alternating the particles or pellets may be deliberately pelletized with inert materials. As discussed in the literature, the inert or ballast material acts as a sink that stores the heat of absorption. This stored heat is subsequently used for the desorption phase when the pressure and/or heat parameters are changed. As is also known in the art, there is a trade-off between pressure drop and the particle size of the alloys as well as the rate of reaction.

It was further found that the $ZrMn_2$ hydride is much more commercially attractive than other hydrides, such as the lanthanum nickel, for the recovery of hydrogen from ammonia purge gas. At the present time, $ZrMn_2$ costs only one-tenth as much as lanthanum nickel. Moreover, $ZrMn_2$ has a higher capacity and faster kinetics when compared to lanthanum nickel. The faster kinetics makes it possible to cycle rapidly the absorption and regeneration modes or phases of the fixed bed processes, which results in better utilization of the absorber beds.

It has been further found that the presence of hydrocarbons, e.g. methane, in the feed stream will not adversely affect the absorption capabilities of $ZrMn_2$. This characteristic, as well as the characteristics discussed above, contribute significantly towards the commercial attractiveness of utilizing $ZrMn_2$.

As previously discussed, $ZrMn_2$ may be employed for selectively removing hydrogen from a variety of industrial gases at temperatures ranging from about -44° to 325° F, preferably about 100° to 325° F, and at pressures ranging from 1 to 750 psia. The pressure employed will, of course, be dependent upon the temperature. The ability of $ZrMn_2$ to operate under such elevated temperature conditions without being poisoned by ammonia, air, water vapor, and hydrocarbon constitutes a very important commercial advantage. Furthermore, $ZrMn_2$ was found not to crack to produce noncondensible nitrogen and hydrogen.

It will be understood that other $ZrMn_x$ alloys, where x is 1.8 to 3.8, as well as ZrNi can also be utilized in the present process.

Industrial gases such as ammonia purge gas, waste gas from a toluene hydroalkylation plant, hydro treater stripper gas, and similar waste and off gas streams.

The intermetallic alloys can be ued in various forms and in various equipment. Fixed bed procedures have been found to be especially useful, and multiple fixed beds would appear to be of advantage when large scale commercial operations, and they would permit continuous separation and recovery of hydrogen. In other words, at least one bed would function to remove the hydrogen from the gaseous feed stream, while at least one other bed would undergo regeneration, i.e., desorption of the hydrogen from the intermetallic alloy, by lowering the pressure or by increasing the temperature of the bed or by both decreasing the pressure and increasing the temperature of the bed. Fluidized bed and slurry bed procedures well known in the art can be utilized in carrying out the present invention. A slurry bed procedure is described in the Journal of Less Common Methods, Vol. 104, pages 175-190 (1984).

0 240 252

The amount of the zirconium intermetallic alloy employed should be at least equal preferably in excess to the amount of hydrogen present. Preferably, the amount of the alloy should be 2-3 times the stochiometric amount.

As mentioned above, for certain applications particles of the zirconium intermetallic alloys are physically admixed with an inert material. Alternatively, the zirconium intermetallic alloys can be pelletized in admixture with the inert material. The amount of inert material can vary widely, but for most it does not exceed 40-60% of the intermetallic alloy.

Especially preferred embodiments of the invention are set forth below.

## EXAMPLE 1

Typical bench scale fixed bed gas treatment apparatus was employed for the recovery of hydrogen from an ammonia purge gas stream having the following composition:

|  | Mol. % |
|---|---|
| Hydrogen | 50-60 |
| Nitrogen | 20 |
| Methane | 12 |
| Argon | 3 |
| Ammonia | 5 |

The intermediate alloy particles used in the fixed bed comprised $ZrMn_2$. Hydrogen absorption was carried out at 100 ° F and under a pressure of 50 atmospheres by passing the ammonia purge gas through the fixed bed. Desorption was carried out by heating the bed to 300° F and by reducing the pressure to 1 atmosphere. Analyses revealed that greater than 90% of the hyrogen in the feed gas was recovered, and that the hydrogen purity was 99%.

## EXAMPLE 2

The run of Example 1 was repeated except that the intermetallic alloy was composed of ZrNi. Hydrogen absorption was performed under the same conditions as before; desorption or regeneration of the intermetallic was conducted at 250° F and 1 atmosphere pressure. The percentage of hydrogen recovered and the purity of the hydrogen were substantially the same as in Example 1.

## EXAMPLE 3

Utilizing the same fixed bed equipment and the intermediate alloy of Example 1, a hydro-treater stripper gas stream (40 mol. % hydrogen, 55 mol. % methane, and 155 ppm of hydrogen sulfide) was passed through the fixed bed at 130° F and a pressure that varied from 85-100 psia. After the flow of feed gas had ceased, desorption or regeneration of the intermetallic alloy was achieved by heatiing the fixed bed to 300° F while reducing the pressure to 1 psia. Analyses showed a hydrogen recovery of 90% and a recovered hydrogen purity of 99%.

The above data demonstrate that these particular zirconium intermetallic alloys of the present invention selectively removes hydrogen from purge gas or waste streams containing such other components as ammonia, water vapor, hydrogen sulfide, or hydrocarbons without being poisoned or rendered ineffective by metal oxide or metal sulfide formation on the surface of the zirconium intermetallic alloy. Moreover, the hydrogen is readily desorbed in regenerating the zirconium intermetallic alloy.

It will be further understood that the invention is subject to variations and modifications without departing from its essential features.

4

## Claims

1. A method for recovering hydrogen from a purge, stripper or waste gas stream, which comprises contacting said hydrogen-containing gas stream with an intermetallic zirconium alloy selected from the group consisting of zirconium manganese, zirconium nickel and mixtures thereof, to form hydrides thereof, and then subsequently desorbing the hydrogen from the zirconium alloy hydride.

2. The method of claim 1 wherein the hydrogen-containing gas stream contains at least one other component selected from the group consisting of ammonia, water vapor, air, gaseous hydrocarbons, hydrogen sulfide, or mixtures thereof.

3. The method of claim 1 wherein the hydrogen-containing gas stream is an ammonia purge-gas process stream.

4. The method of claim 1 wherein the hydrogen-containing gas stream is a hydro-treater stripper gas.

5. The method of claim 1 wherein the intermetallic alloy is zirconium manganese.

6. The method of claim 5 wherein the zirconium manganese is $ZrMn_x$ where x is 1.8-3.8.

7. The method of claim 1 wherein the intermetallic alloy is $ZrMn_2$.

8. The method of claim 1 wherein the intermediate alloy is ZrNi.

9. A method for selectively separating hydrogen contaminant from an industrial gas stream, which comprises passing said gas stream through a bed of intermetallic zirconium alloy particles selected from the group consisting of zirconium manganese, zirconium nickel, and mixtures thereof, to form hydrides thereof, and then subsequently desorbing the hydrogen from the zirconium alloy hydride.

10. The method of claim 9 wherein the industrial gas stream also contains ammonia, water vapor, air, gaseous hydrocarbons, hydrogen sulfide, or mixtures thereof.

11. The method of claim 10 wherein the gas stream is an ammonia purge-gas process stream.

12. The method of claim 10 wherein the intermetallic zirconium alloy is $ZrMn_x$ with x ranging from 1.8 to 3.8.

13. The method of claim 12 wherein the intermetallic zirconium alloy is $ZrMn_2$.

14. The method of claim 9 wherein the gas stream is passed through the zirconium intermetallic alloy bed at a temperature within the raanngge of -44° to 325° F.